(19)

Europäisches Patentamt
European Patent Office
Office européen des brevets

(11) **EP 2 011 909 A1**

(12) **DEMANDE DE BREVET EUROPEEN**

(43) Date de publication:
**07.01.2009 Bulletin 2009/02**

(51) Int Cl.:
*D02G 3/04* (2006.01) *D02G 3/44* (2006.01)
*C04B 16/06* (2006.01)

(21) Numéro de dépôt: **08158736.2**

(22) Date de dépôt: **23.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **05.07.2007 FR 0704856**

(71) Demandeur: **SA Schappe**
**88520 Ban de Laveline (FR)**

(72) Inventeurs:
• **Guevel, Jean**
  **01480, JASSANS RIOTTIER (FR)**
• **Bontemps, Guy**
  **01230, TENAY (FR)**

(74) Mandataire: **Maureau, Philippe et al**
**Cabinet Germain & Maureau,**
**12, rue Boileau,**
**BP 6153**
**69466 Lyon Cedex 06 (FR)**

(54) **Fil hybride destiné au renforcement de plaques**

(57)    L'invention concerne un fil hybride destiné au renforcement de plaques, <u>caractérisé en ce qu</u>'il comporte au moins un multifilaments comprenant au moins un premier et un second types de fibres continues, présentant respectivement un premier et un second taux d'allongement à la rupture, le second taux d'allongement à la rupture étant d'une valeur comprise entre 28 % et 90 % du premier taux d'allongement à la rupture.

FIG.5

EP 2 011 909 A1

## Description

L'invention concerne un fil hybride destiné au renforcement de plaques ainsi qu'une plaque correspondante.

Les plaques minces, planes ou ondulées sont généralement destinées à la réalisation de toitures et sont réalisées à base de ciment. Elles sont en outre renforcées à partir de fibres qui, depuis l'interdiction de l'apport de fibres d'amiante dans le mortier de ciment, sont des fibres artificielles, organiques ou minérales.

Les fibres de renforcement sont discontinues et distribuées de manière aléatoire par mélangeage lors de la préparation des mélanges cimentaires.

Leurs proportions sont variables, souvent limitées par la faible masse volumique des fibres artificielles et organiques. Leur prix limite également l'apport de ces matériaux.

Dans ces conditions, la résistance des plaques ainsi obtenues est insuffisante pour certaines utilisations, dans lesquelles sont demandées à la fois une bonne résistance en flexion vis-à-vis des charges uniformément réparties, en particulier la neige, mais également une bonne résistance aux chocs, en particulier lors de la chute éventuelle d'opérateurs pendant la construction ou l'entretien.

Il existe de nombreuses solutions destinées au renforcement des plaques cimentaires planes ou ondulées.

Les documents US 5814146A, US 474907A, JP 03043551, EP 0155520A et JP 11157894 décrivent des plaques utilisant soit des fils de différentes compositions, soit des lanières étroites extrudées, de manière à former des renforcements.

Ces renforcements ont en commun d'être résistants aux milieux alcalins et de présenter une résistance accrue à la rupture en traction.

Ces renforcements permettent également d'accroître la capacité d'absorption de l'énergie lors de chocs, résultant notamment de la chute d'un opérateur, de matériaux ou d'outils, en limitant l'adhésion entre les fibres et la matrice cimentaire.

Une telle d'absorption est en partie due au fait que les fibres de renfort peuvent s'allonger, et donc se déplacer, à l'intérieur de la matrice cimentaire.

L'amélioration de ces caractéristiques est obtenue en augmentant la quantité de fils ou lanières par unité de surface des plaques.

Ce type de plaques présente le désavantage d'augmenter les coûts à la fois au niveau des matières utilisées, mais également au niveau de la fabrication des plaques renforcées.

Par ailleurs, ces plaques n'offrent pas une résistance suffisante aux chocs.

En effet, la rupture des fibres de renforcement de ce type de plaques est de type fragile, c'est-à-dire intervient brutalement, et résulte de contraintes composées de traction et de cisaillement.

Or, il est connu que les ciments et mortiers ont de très bonnes résistances en compression, mais de très faibles résistances en flexion et en traction.

Lorsqu'une plaque à base de ciment est soumise un choc, celle-ci est essentiellement soumise à des contraintes de compression en partie supérieure, et à des contraintes de traction en partie inférieure, résultant de la déformation induite par le choc.

Les fibres de renforcement utilisées ne permettent pas de limiter les contraintes de traction et, par conséquent, n'augmentent pas suffisamment la résistance aux chocs de ce type de plaques.

L'invention vise à remédier à ces inconvénients en proposant un fil de renforcement permettant la réalisation de plaques à bas coût et ayant une résistance accrue aux chocs.

A cet effet, l'invention concerne un fil hybride destiné au renforcement de plaques, caractérisé en ce qu'il comporte au moins un multifilaments comprenant au moins un premier et un second types de fibres continues, présentant respectivement un premier et un second taux d'allongement à la rupture, le second taux d'allongement à la rupture étant d'une valeur comprise entre 28 % et 90 % du premier taux d'allongement à la rupture.

De cette manière, lors d'un choc d'une énergie importante, les fibres du premier et du second types s'allongent simultanément, absorbant ainsi une partie de l'énergie du choc. Si le choc est d'énergie très importante, les fibres du second type se déforment jusqu'à provoquer leur rupture. Une partie de l'énergie du choc est alors absorbée lors de cette rupture. L'énergie résiduelle d'un choc violent peut encore être absorbée par la déformation des fibres du premier type.

Selon une caractéristique de l'invention, les fibres du premier et du second types sont réalisées dans deux matériaux différents et sont par exemple des fibres organiques, artificielles ou minérales.

Selon une première forme de réalisation, le multifilaments comprend au moins des fibres polyoléfines à haute ténacité et des fibres cellulosiques régénérées à haute ténacité.

Selon une seconde forme de réalisation, le multifilaments comprend au moins des fibres polyoléfines à haute ténacité et des fibres polyamides à haute ténacité dont les monomères appartiennent aux motifs Pa 11, Pa 12, Pa 6, Pa 6-6, Pa 4-6.

Selon une troisième forme de réalisation, le multifilaments comprend au moins des fibres polyoléfines à haute ténacité et des fibres de verre Alcali Résistant.

Selon une quatrième forme de réalisation, le multifilaments comprend au moins des fibres polyamides 11, 12, 6, 6-6, 4-6 et des fibres cellulosiques régénérées à haute ténacité.

Selon une cinquième forme de réalisation, le multifilaments comprend au moins des fibres polyamides 11, 12, 6, 6-6, 4-6 et des fibres de verre de type Alcali Résistant.

Selon une sixième forme de réalisation, le multifilaments comprend au moins des fibres de cellulose régénérées à haute ténacité et des fibres de verre de type Alcali Résistant.

Selon une septième forme de réalisation, le multifilaments comprend au moins des fibres d'alcool polyvinylique à haute ténacité et des fibres polyoléfines à haute ténacité.

Selon une huitième forme de réalisation, le multifilaments comprend au moins des fibres d'alcool polyvinylique à haute ténacité et des fibres de cellulose régénérée à haute ténacité.

Selon une neuvième forme de réalisation, le multifilaments comprend au moins des fibres d'alcool polyvinylique à haute ténacité et des fibres de verre Alcali Résistant.

Selon une dixième forme de réalisation, le multifilaments comprend au moins des fibres d'alcool polyvinylique à haute ténacité et des fibres polyamides 11, 12, 6, 6-6, 4-6.

Préférentiellement, le multifilaments est réalisé par retordage des premier et second types de fibres.

Avantageusement, le fil hybride est réalisé par retordage d'une pluralité de multifilaments.

Selon une caractéristique de l'invention, le coefficient de torsion des fibres retordues du premier et du second types et/ou le coefficient de torsion des multifilaments retordus sont compris entre 20 et 100.

L'invention concerne en outre une plaque mince réalisée à base de matière cimentaire, caractérisée en ce qu'elle comporte une pluralité de fils hybrides selon l'invention.

De toute façon, l'invention sera bien comprise à l'aide de la description qui suit en référence au dessin schématique annexé représentant, à titre d'exemples, plusieurs formes de réalisation de ce fil hybride.

Figure 1 est une vue schématique représentant le retordage d'un multifilaments ;
Figure 2 est une vue schématique représentant le retordage d'un fil hybride selon l'invention ;
Figures 3 et 4 sont des graphiques représentant respectivement l'allongement du premier et du second types de fibres;
Figure 5 est un graphique représentant l'allongement du multifilaments ;
Figures 6 à 10 sont des figures correspondant aux figures 1 à 5, d'une autre forme de réalisation de l'invention.

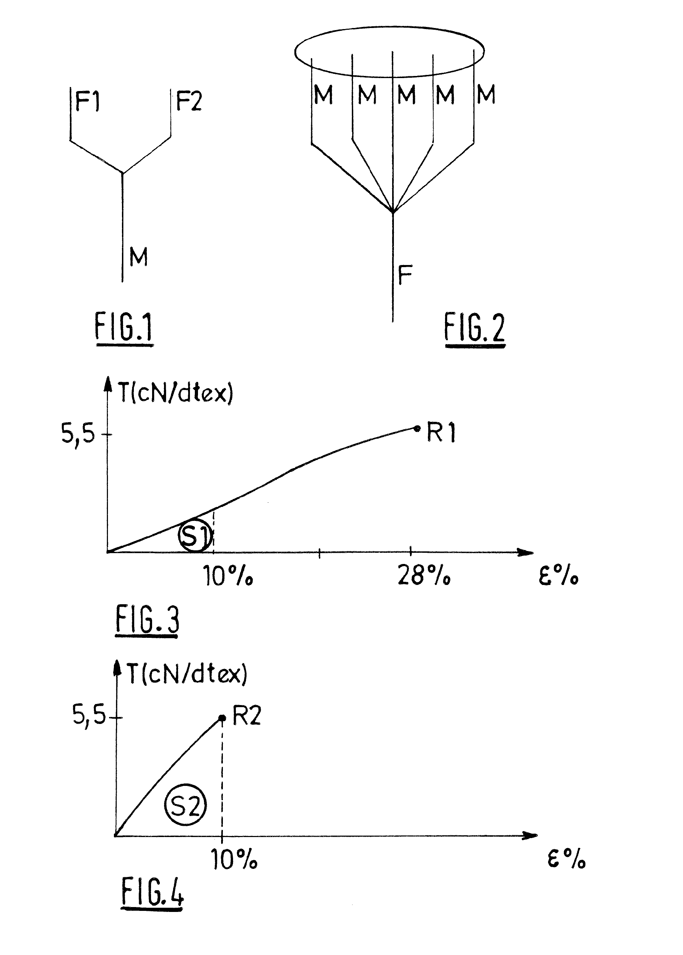

Comme représenté en figure 1, un multifilaments est réalisé par retordage d'un premier et d'un second filaments réalisés respectivement à partir d'un premier et d'un second types de fibres.

Selon une première forme de réalisation, le filament f1 comporte des fibres polyoléfines à haute ténacité, dont les propriétés sont les suivantes :

- titre : 1670 dTex
- ténacité: 5 à 6 cN/dTex
- allongement de rupture : 28%

Le filament f2 comporte des fibres cellulosiques à haute ténacité, dont les propriétés sont les suivantes :

- titre : 1840 dTex
- ténacité : 5 à 6 cN/dTex
- allongement de rupture: 10% La torsion à appliquer aux filaments f1 et f2 lors du retordage du multifilaments M est donnée par la relation $t_M = \alpha \dfrac{100}{\sqrt{T_M}}$ dans laquelle $t_M$ est la torsion donnée à l'assemblage des deux fils exprimée en tours/m et $T_M$ étant le titre en décitex. Dans cet exemple, $T_M = 1670 + 1840 = 3510$ dTex, $\alpha=70$ et $t_M=115$ tours/m, la torsion étant réalisée dans le sens Z, c'est-à-dire à gauche.

Un fil hybride F selon l'invention est ensuite assemblé par retordage de 5 multifilaments M, comme cela est représenté en figure 2.

Dans cet exemple, la torsion appliquée est calculée comme suit : $t_F = \alpha \dfrac{100}{\sqrt{T_F}}$ avec $T_F = 5 \times 3510 = 17\,550$ dTex et $\alpha = 70$.

Il ressort de cette équation que la torsion $t_F$ est de 53 tours/m, celle-ci étant réalisée dans le sens S, c'est-à-dire à droite.

Les courbes représentant la force de traction des filaments $f_1$ et $f_2$ en fonction de leur allongement $\varepsilon$ apparaissent respectivement aux figures 3 et 4. Les points de ruptures respectifs sont désignés par $R_1$ et $R_2$.

On désigne par $S_1$ l'aire située sous la courbe de la figure 3, pour un allongement compris entre 0 et 10%, cette dernière valeur correspondant à l'allongement de rupture du filament $f_2$.

On désigne par $S_2$ l'aire située sous la courbe de la figure 4, pour un allongement compris entre 0 et 10%.

La courbe de la figure 3 représente la force de traction d'un multifilaments M obtenu par retordage des filaments $f_1$ et $f_2$, en fonction de son allongement. Cette courbe correspond à la superposition des courbes représentées aux figures 3 et 4.

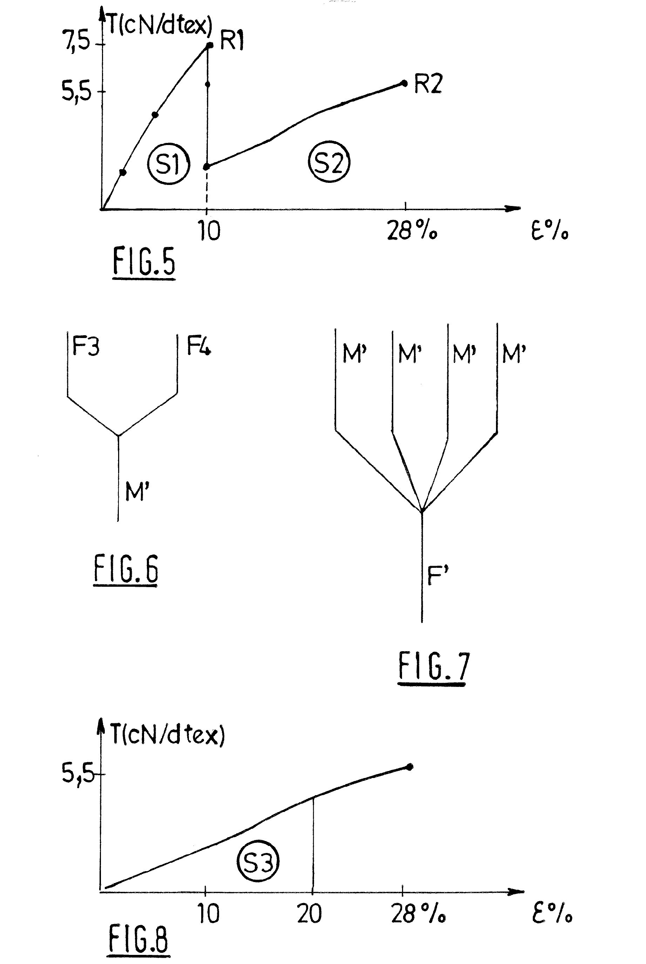

On désigne par S'1 l'aire située sous la courbe de la figure 5, pour un allongement compris entre 0 et 10% et par $S_2$ l'aire située sous cette courbe, pour un allongement compris entre 0 et 28%, cette dernière valeur correspondant à l'allongement de rupture du filament $f_1$.

Ainsi, lorsque le multifilaments est étiré, par exemple lors d'un choc, les filaments $f_1$ et $f_2$ s'allongent simultanément jusqu'au point de rupture $R_1$. Lorsque ce

point de rupture est atteint, c'est-à-dire lorsque filaments $f_1$ et $f_2$ sont allongés d'une valeur de 10%, le filament $f_2$ rompt.

L'énergie absorbée par le mutifilaments M lors de son allongement jusqu'au point de rupture $R_1$ correspond à l'aire $S'_1$, qui est la somme des aires $S_1$ et $S_2$.

Lors d'un choc violent, c'est-à-dire d'une énergie importante, le multifilaments M continue de s'allonger par l'intermédiaire du filament $f_1$ dont l'allongement à la rupture est le plus important.

Le multifilaments M est ainsi encore capable d'absorber une énergie correspond à l'aire $S'_2$.

Donc, au total, le multifilaments est capable de résister à un choc dont l'énergie correspond à la sommes des aires $S'_1$ et $S'_2$.

Il est à noter que les valeurs d'efforts données aux figures 3 à 5 doivent être multipliées par le nombre de multifilaments que comporte le fil hybride afin d'évaluer la résistance aux chocs de ce dernier.

L'invention porte en outre sur une plaque mince réalisée à base de matière cimentaire et comportant une pluralité de fils hybrides de renfort du type précité.

Dans ce cas, la plaque ainsi constituée sera capable d'absorber une énergie dont la valeur dépend du nombre de fils hybrides de renfort par unité de surface. La plaque sera par exemple capable de résister à une énergie de 900 à 1000 Joules par $m^2$.

Dans une autre forme de réalisation, un filament $f_3$ comporte des fibres polyoléfines à haute ténacité, dont les propriétés sont les suivantes :

- titre : 1670 dTex
- ténacité: 5 à 6 cN/dTex
- allongement de rupture : 28%

Un filament $f_4$ comporte des fibres polyamide 6 ou 6-6 à haute ténacité, dont les propriétés sont les suivantes :

- titre : 1840 dTex
- ténacité : 9 cN/dTex
- allongement de rupture: 20%

L'assemblage du multifilaments M' à partir des filaments $f_3$ et $f_4$ est réalisé par retordage, comme cela est représenté en figure 6. La torsion est, comme précédemment, définie par la formule $t_{M'} = \alpha \dfrac{100}{\sqrt{T_{M'}}}$.

Comme précédemment, $T_{M'}$ = 1670 + 1840 = 3510 dTex, $\alpha$=70 et $t_{M'}$=115 tours/m, la torsion étant réalisée dans le sens Z, c'est-à-dire à gauche.

Le fil hybride F' est ensuite assemblé par retordage de 4 multifilaments M', comme cela est représenté en figure 7.

Dans cet exemple, la torsion appliquée est calculée comme suit :

$$t_{F'} = \alpha \frac{100}{\sqrt{T_{F'}}}$$

avec $T_F$ = 4 x 3510 = 10 040 dTex et $\alpha$ = 70.

Il ressort de cette équation que la torsion $t_{F'}$ est de 60 tours/m, celle-ci étant réalisée dans le sens S, c'est-à-dire à droite.

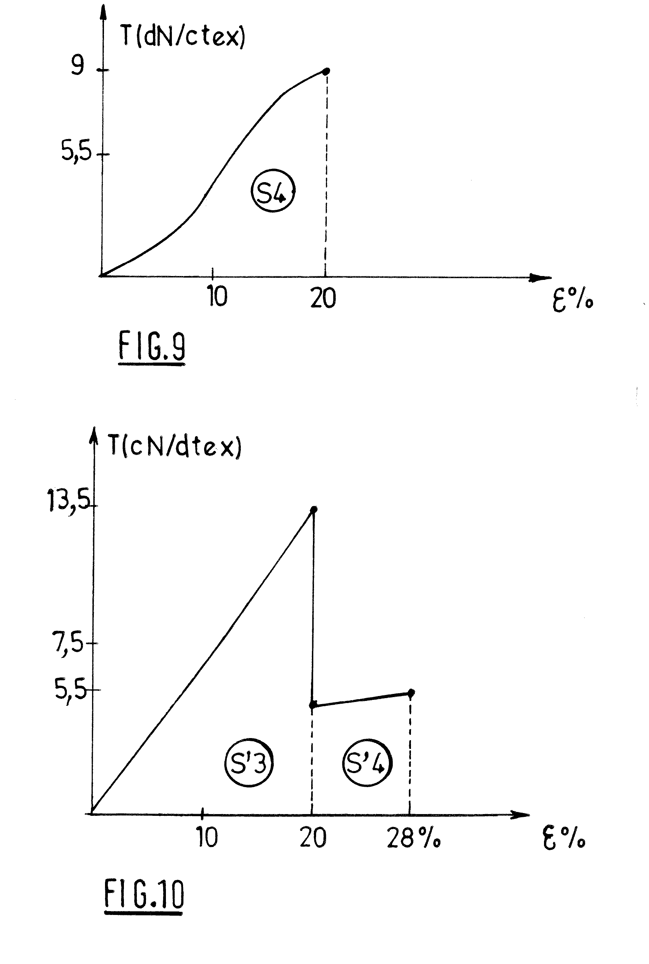

Les courbes représentant la force de traction des filaments $f_3$ et $f_4$ en fonction de leur allongement $\varepsilon$ apparaissent respectivement aux figures 8 et 9. Les points de ruptures respectifs sont désignés par $R_3$ et $R_4$.

De même que précédemment, on désigne par $S_3$ l'aire située sous la courbe de la figure 3, pour un allongement compris entre 0 et 20%, cette dernière valeur correspondant à l'allongement de rupture du filament $f_3$.

On désigne par $S_4$ l'aire située sous la courbe de la figure 4, pour un allongement compris entre 0 et 20%.

La courbe de la figure 10 représente la force de traction d'un multifilaments M' obtenu par retordage des filaments $f_3$ et $f_4$, en fonction de son allongement. Cette courbe correspond à la superposition des courbes représentées aux figures 8 et 9.

Le comportement du fil hybride F' est le même que précédemment, seules les valeurs des différents paramètres étant différents.

Comme cela apparaît dans les différentes formes de réalisation possibles de l'invention, les matériaux utilisés pour réaliser le fil hybride sont des matériaux à haut allongement et haute résistance à la rupture.

Quelle que soit la forme de réalisation envisagée, les fils utilisés pour le réaliser le multifilaments présentent des allongements à la rupture différents, de manière à avoir au maximum un premier type de filament qui rompt en ayant absorbé le maximum d'énergie, tandis qu'un second type de filament reste apte à absorber de l'énergie issue du choc par allongement.

Les caractéristiques mécaniques des filaments ainsi que la densité des filaments et des multifilaments dans la plaque sont adaptées de sorte que la somme des énergies nécessaires pour rompre les filaments du premier type et pour déformer partiellement les filaments du second type est largement supérieure à l'énergie due au choc.

En outre, quelle que soit la forme de réalisation, les matériaux employés pour la réalisation du fil hybride sont résistants aux milieux alcalins et permettent d'éviter une adhérence entre le fil hybride et la matrice cimentaire.

Comme il va de soi l'invention ne se limite pas aux forme de réalisation de ce fil hybride, décrites ci-dessus à titre d'exemples, mais elle embrasse au contraire toutes les variantes. C'est ainsi notamment que chaque multifilaments pourrait comporter plus de deux filaments.

**Revendications**

1. Fil hybride (F, F') destiné au renforcement de plaques, **caractérisé en ce qu'**il comporte au moins un multifilaments (M, M') comprenant au moins un premier et un second types de fibres continues ($f_1$, $f_2$), présentant respectivement un premier et un second taux d'allongement à la rupture, le second taux d'allongement à la rupture étant d'une valeur comprise entre 28 % et 90 % du premier taux d'allongement à la rupture.

2. Fil hybride (F, F') selon la revendication 1, **caractérisé en ce que** les fibres du premier et du second types ($f_1$, $f_2$) sont réalisées dans deux matériaux différents et sont par exemple des fibres organiques, artificielles ou minérales.

3. Fil hybride (F, F') selon la revendication 2, **caractérisé en ce que** le multifilaments (M, M') comprend au moins des fibres polyoléfines à haute ténacité et des fibres cellulosiques régénérées à haute ténacité.

4. Fil hybride (F, F') selon la revendication 2, **caractérisé en ce que** le multifilaments (M, M') comprend au moins des fibres polyoléfines à haute ténacité et des fibres polyamides à haute ténacité dont les monomères appartiennent aux motifs Pa 11, Pa 12, Pa 6, Pa 6-6, Pa 4-6.

5. Fil hybride (F, F') selon la revendication 2, **caractérisé en ce que** le multifilaments (M, M') comprend au moins des fibres polyoléfines à haute ténacité et des fibres de verre Alcali Résistant.

6. Fil hybride (F, F') selon la revendication 2, **caractérisé en ce que** le multifilaments (M, M') comprend au moins des fibres polyamides 11, 12, 6, 6-6, 4-6 et des fibres cellulosiques régénérées à haute ténacité.

7. Fil hybride (F, F') selon la revendication 2, **caractérisé en ce que** le multifilaments (M, M') comprend au moins des fibres polyamides 11, 12, 6, 6-6, 4-6 et des fibres de verre de type Alcali Résistant.

8. Fil hybride (F, F') selon la revendication 2, **caractérisé en ce que** le multifilaments (M, M') comprend au moins des fibres de cellulose régénérées à haute ténacité et des fibres de verre de type Alcali Résistant.

9. Fil hybride (F, F') selon la revendication 2, **caractérisé en ce que** le multifilaments (M, M') comprend au moins des fibres d'alcool polyvinylique à haute ténacité et des fibres polyoléfines à haute ténacité.

10. Fil hybride (F, F') selon la revendication 2, **caractérisé en ce que** le multifilaments (M, M') comprend au moins des fibres d'alcool polyvinylique à haute ténacité et des fibres de cellulose régénérée à haute ténacité.

11. Fil hybride (F, F') selon la revendication 2, **caractérisé en ce que** le multifilaments (M, M') comprend au moins des fibres d'alcool polyvinylique à haute ténacité et des fibres de verre Alcali Résistant.

12. Fil hybride (F, F') selon la revendication 2, **caractérisé en ce que** le multifilaments (M, M') comprend au moins des fibres d'alcool polyvinylique à haute ténacité et des fibres polyamides 11, 12, 6, 6-6, 4-6.

13. Fil hybride (F, F') selon l'une des revendications 1 à 12, **caractérisé en ce que** le multifilaments (M, M') est réalisé par retordage des premier et second types de fibres ($f_1$, $f_2$).

14. Fil hybride (F, F') selon la revendication 13, **caractérisé en ce qu'**il est réalisé par retordage d'une pluralité de multifilaments (M, M').

15. Fil hybride (F, F') selon la revendication 14, **caractérisé en ce que** le coefficient de torsion des fibres retordues du premier et du second types et/ou le coefficient de torsion des multifilaments retordus sont compris entre 20 et 100.

16. Plaque mince réalisée à base de matière cimentaire, **caractérisée en ce qu'**elle comporte une pluralité de fils hybrides (F, F') selon l'une des revendications 1 à 15.

FIG.1

FIG.2

FIG.3

FIG.4

FIG.5

FIG.6

FIG.7

FIG.8

FIG.9

FIG.10

| Europäisches Patentamt European Patent Office Office européen des brevets | **RAPPORT DE RECHERCHE EUROPEENNE** | Numéro de la demande EP 08 15 8736 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 024 539 A (CHEMIE LINZ AG [AT]; LENTIA GMBH [AT]) 11 mars 1981 (1981-03-11) * revendications 1,10 * ----- | 1,16 | INV. D02G3/04 D02G3/44 C04B16/06 |
| A | JP 09 328342 A (KURARAY CO) 22 décembre 1997 (1997-12-22) * abrégé * ----- | 1,16 | |
| A | WO 02/00566 A (DOW CHEMICAL CO [US]) 3 janvier 2002 (2002-01-03) * revendication 1 * ----- | 1,16 | |
| A | WO 2006/000735 A (DUNLOP OIL & MARINE LTD [GB]; ZANDIYEH ALI REZA KAMBIEZ [GB]) 5 janvier 2006 (2006-01-05) * revendications 1-3 * ----- | 1 | |
| A | GB 2 372 262 A (ROBLON AS [DK]) 21 août 2002 (2002-08-21) * revendications 1,3 * ----- | 1 | |

| DOMAINES TECHNIQUES RECHERCHES (IPC) |
|---|
| C04B D02G E04C |

Le présent rapport a été établi pour toutes les revendications

| Lieu de la recherche | Date d'achèvement de la recherche | Examinateur |
|---|---|---|
| La Haye | 13 octobre 2008 | D'Souza, Jennifer |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................

& : membre de la même famille, document correspondant

EPO FORM 1503 03.82 (P04C02)

EP 2 011 909 A1

**ANNEXE AU RAPPORT DE RECHERCHE EUROPEENNE
RELATIF A LA DEMANDE DE BREVET EUROPEEN NO.**

EP 08 15 8736

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2008

| Document brevet cité au rapport de recherche | | Date de publication | Membre(s) de la famille de brevet(s) | | Date de publication |
|---|---|---|---|---|---|
| EP 0024539 | A | 11-03-1981 | DE | 2933689 A1 | 09-04-1981 |
| | | | DK | 331180 A | 21-02-1981 |
| | | | NO | 802456 A | 23-02-1981 |
| JP 9328342 | A | 22-12-1997 | AUCUN | | |
| WO 0200566 | A | 03-01-2002 | AT | 348086 T | 15-01-2007 |
| | | | AU | 6690701 A | 08-01-2002 |
| | | | AU | 2001266907 B2 | 15-09-2005 |
| | | | CA | 2412599 A1 | 03-01-2002 |
| | | | CN | 1438974 A | 27-08-2003 |
| | | | DE | 60125178 T2 | 15-11-2007 |
| | | | EP | 1299320 A1 | 09-04-2003 |
| | | | ES | 2273851 T3 | 16-05-2007 |
| | | | NO | 20033685 A | 19-08-2003 |
| WO 2006000735 | A | 05-01-2006 | BR | PI0512531 A | 25-03-2008 |
| | | | EP | 1761723 A1 | 14-03-2007 |
| | | | JP | 2008503699 T | 07-02-2008 |
| | | | US | 2007277895 A1 | 06-12-2007 |
| GB 2372262 | A | 21-08-2002 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5814146 A
- US 474907 A
- JP 03043551 B
- EP 0155520 A
- JP 11157894 B